# FASCICULE DE BREVET EUROPEEN

(11) **EP 1 846 666 B1**
(45) Date de publication et mention de la délivrance du brevet: **10.03.2010**
(21) Numéro de dépôt: 06709459.9
(22) Date de dépôt: 31.01.2006
(51) Int. Cl.: F16D 48/06

(54) **PROCEDE DE RECONNAISSANCE DE L'ETAT D'UN DISPOSITIF D'EMBRAYAGE ENTRE UN MOTEUR ET UNE BOITE DE VITESSE**
ZUSTANDSERKENNUNGSVERFAHREN, DAS ZUR ERMITTLUNG DES ZUSTANDS EINER KUPPLUNG ZWISCHEN EINEM MOTOR UND EINEM GETRIEBE VERWENDET WIRD
STATE-RECOGNITION METHOD WHICH IS USED TO ASCERTAIN THE SATE OF A CLUTCH DEVICE BETWEEN AN ENGINE AND A GEARBOX

(30) Priorité: 31.01.2005 FR 0550262
(43) Date de publication de la demande: 24.10.2007
(73) Titulaire: RENAULT S.A.S., 92100 Boulogne Billancourt (FR)
(72) Inventeur: TURCAUD, Cédric, F-92360 Meudon La Foret (FR); FAIVRE, Sébastien, F-91300 Massy (FR)
(86) Numéro de dépôt international: PCT/FR2006/050075
(87) Numéro de publication internationale: WO 2006/079764

(56) Documents cités:
- EP-A- 0 924 443
- US-A1- 2003 220 171
- US-B1- 6 334 079

## Description

La présente invention concerne un procédé de reconnaissance de l'état d'un dispositif d'embrayage d'un moteur et d'une boite de vitesses d'un véhicule automobile. L'invention concerne plus particulièrement un procédé de reconnaissance de l'état d'un dispositif d'embrayage n'utilisant pas d'information provenant d'un contacteur physique monté sur la pédale d'embrayage. Le procédé de reconnaissance est réalisé par un calculateur électronique.

Pour les moteurs à combustion interne, à essence ou diesel, les stratégies de contrôle moteur, concernant notamment la régulation du ralenti et la gestion des à-coups de couple, sont plus performantes quand elles disposent en temps réel de l'information sur l'état du dispositif d'embrayage entre la boite de vitesses et le moteur, c'est-à-dire sur les instants où les deux disques du dispositif d'embrayage sont solidaires physiquement (appelé état embrayé) ou au contraire complètement désolidarisés (appelé état débrayé).

Pour une stratégie de contrôle des à-coups de couple, il est intéressant de repérer ces instant de passage d'un état à l'autre, d'une part pour filtrer les variations de régime dans l'état embrayé, ce qui permet d'éviter les à-coups de couple, et d'autre part pour ne pas filtrer ces variations de régime dans l'état débrayé, par exemple pour obtenir une chute de régime suffisamment rapide lors des changements de vitesse.

On connaît le brevet EP 0924443 qui décrit un procédé de reconnaissance de l'état d'un dispositif d'embrayage entre un moteur et une boite de vitesses d'un véhicule. Le procédé décrit dans ce brevet a pour but de délivrer un signal représentatif de l'état du dispositif d'embrayage ; Ce signal provient de la prise en compte d'un signal représentatif de l'état embrayé, et d'un signal représentatif de l'état débrayé. Ces deux derniers signaux sont quant à eux calculés à partir d'un signal représentant le rapport de la vitesse du véhicule sur le régime du moteur, et d'un signal représentant la dérivée première du régime moteur par rapport au temps.

Dans ce procédé, on détecte la présence du signal représentant le rapport de la vitesse du véhicule sur le régime du moteur dans des fenêtres de rapports de boite de vitesses, en le comparant avec un nombre de seuils égal au nombre de rapports de la boite de vitesses. Cette détection s'avère nécessaire, mais elle est insuffisante. En effet, ce signal peut être perturbé du fait de plusieurs paramètres, ce qui peut entraîner une fluctuation non souhaitée sur le signal représentatif de l'état embrayé.

Les perturbations proviennent notamment du fait que le dispositif d'embrayage comporte un accouplement élastique.

Les perturbations proviennent aussi du fait de la phase dite de glissement (c'est-à-dire que les disques du dispositif d'embrayage sont en contact et frottent l'un sur l'autre, mais qu'ils ne sont pas solidarisés).

Un des objectifs de l'invention est de pallier à ces inconvénients.

Elle fournit dans ce but un procédé de reconnaissance de l'état d'un dispositif d'embrayage selon la revendication 1.

Selon une autre caractéristique additionnelle du procédé de reconnaissance de l'embrayage selon l'invention, l'étape de caractérisation du signal représentatif de l'état débrayé peut se faire également par la prise en compte d'un signal (information freinage). En cas de détection du signal (information freinage), le signal de représentant la dérivée première du régime moteur par rapport au temps est remplacé par un seuil. Ce signal (information freinage) peut provenir d'un contacteur digital situé sur la pédale de frein.

La présente invention et ses avantages seront mieux compris à la lecture de la description détaillée d'un mode de réalisation pris à titre d'exemple et nullement limitatif, et illustré par les dessins annexés sur lesquels :
- la figure 1 représente le schéma de principe du procédé de reconnaissance de l'embrayage selon l'invention ;
- la figure 2 représente en détail l'étape de caractérisation de la stabilité du signal V/N;
- la figure 3 représente le schéma détaillé du procédé.

Le principe du procédé de reconnaissance de l'état d'un dispositif d'embrayage entre un moteur et une boite de vitesse d'un véhicule consiste à créer un signal SEF représentatif de l'état du dispositif d'embrayage.

Pour y parvenir, on utilise plusieurs signaux, notamment le signal V/N représentant le rapport de la vitesse V du véhicule sur le régime N du moteur, et à repérer en temps réel l'entrée de ce signal V/N dans l'une des fenêtres particulières, dont chacune est directement associée à un rapport déterminé de la boite de vitesses, au type de monte pneumatique du véhicule et à la dispersion des grandeurs d'entrée, que ce signal y entre lors d'un passage à une vitesse supérieure ou inférieure. Ces fenêtres de repérage sont calibrées expérimentalement à partir d'essais sur véhicule et en tenant compte des dispersions. De plus, pour anticiper le débrayage et détromper le ré-embrayage, le procédé calcule la dérivée première, par rapport au temps, du régime moteur.

Selon l'invention, pour assurer une détection robuste, un critère supplémentaire dit de « stabilité » du signal V/N par rapport à sa valeur précédente dans des fenêtres particulières est ajouté.

### CALCUL DE V/N et dN /dT

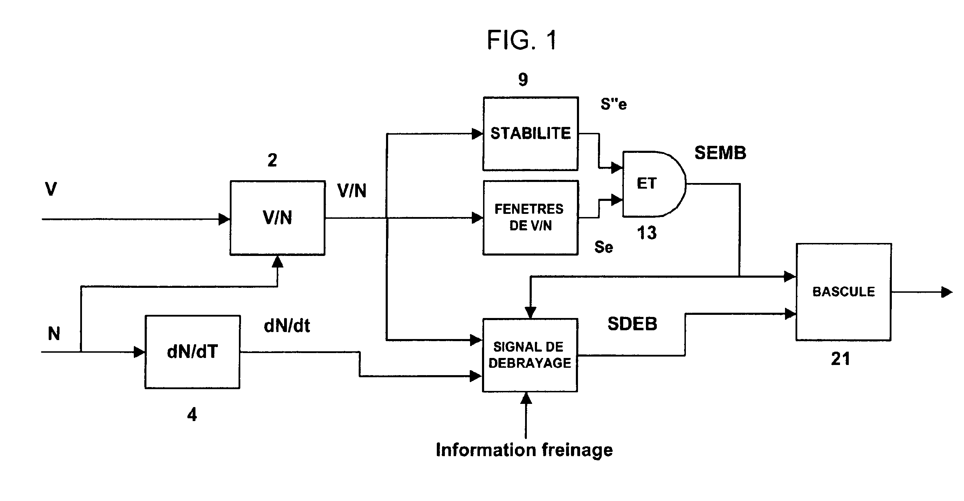

Comme le montre le schéma de principe de la figure 1, une première étape du procédé consiste d'abord à délivrer un signal (V/N) représentant le rapport de la vitesse V du véhicule sur le régime N du moteur. Simultanément, une autre étape du procédé réalise le calcul de la dérivée première (dN/dt) du régime par rapport au temps.

### - CALCUL DE V/N

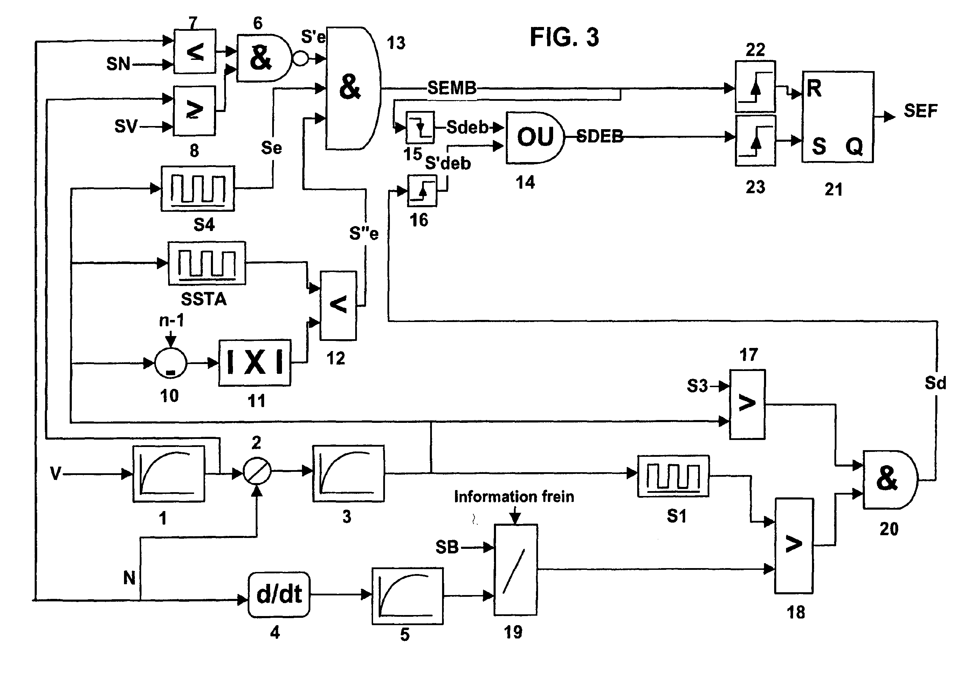

En référence aussi à la figure 3, la vitesse véhicule brute V, doit être filtrée tout d'abord pour éliminer le bruit, par un filtrage passe-bas 1 du premier ordre, qui doit tenir compte de la stratégie d'embrayage, mais aussi des autres stratégies initialement présentes utilisant cette variable. La vitesse V filtrée est ensuite divisée (fonction division 2) par le régime moteur moyen N, dont le résultat est ensuite filtré à son tour lors d'un filtrage passe-bas 3, suffisamment fort pour réduire le bruit du signal, mais sans créer un retard trop grand.

### - CALCUL DE dN/dt

Le calcul de la dérivée première (dN/dt) par rapport au temps du régime moteur moyen N est réalisé par exemple par une simple fonction division 4 du régime par la période de récurrence delta t de la tâche accomplie par le calculateur lors d'une stratégie, qui est fixe, par exemple égale à 10 ms.

Cette dérivée première (dN/dt) est filtrée ensuite par un filtrage passe-bas du premier ordre, référencé 5, destiné à enlever une partie du bruit, mais rester suffisamment rapide, car ces signaux sont utilisés pour détecter le plus rapidement possible les changements d'état.

### CREATION DU SIGNAL SEMB

Une étape suivante du procédé de reconnaissance, apparaissant également sur la figure 3, consiste à détecter la présence du signal (V/N) dans des fenêtres de rapports de boite, à utiliser cette même information (V/N) par rapport à sa valeur de calcul précédente et à la comparer par rapport à des seuils, pour délivrer un signal SEMB.

### - CREATION DU SIGNAL Se

Pour cela, comme le montre la figure 3, le signal (V/N) est comparé à un seuil S4 qui est fonction des rapports possibles de la boite de vitesses pour donner un signal Se. Le but de Se est de s'assurer que le rapport V/N correspond ou non à un rapport de boite du véhicule.

### - CREATION DU SIGNAL S'e

Pour éviter des basculements intempestifs du signal SEMB en phase de ralenti du moteur, une fonction logique (ET) barre inversée 6 combine la valeur du régime moteur (N), quand elle est inférieure à un seuil maximal (SN) déterminé (fonction comparaison 7) avec la valeur du signal (V) quand elle est supérieure à un seuil (SV) déterminé (fonction comparaison 8) correspondant à l'état débrayé de l'ensemble moteur - boite de vitesses en phase de roulage du véhicule, et délivre un signal (S'e).

### - CREATION DU SIGNAL S"e

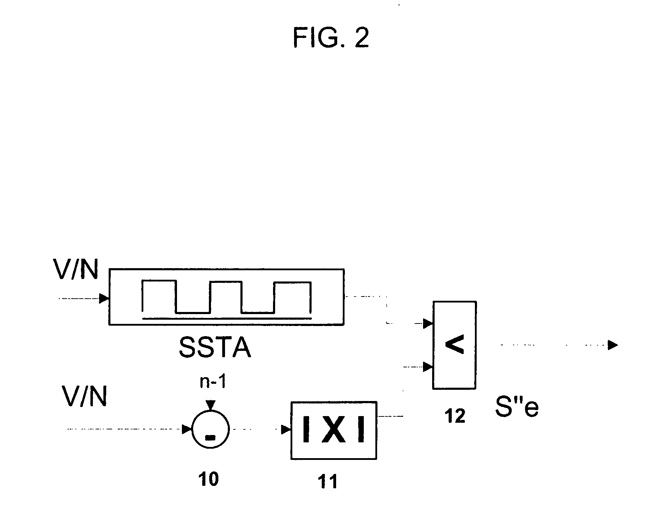

Selon l'invention, l'étape de caractérisation du signal SEMB comporte une étape 9 de caractérisation de la stabilité du signal (V/N). Dans cette étape représentée en détail à la figure 2, le signal (V/N) filtré est utilisé simultanément dans deux calculs :
- le premier calcul consiste à détecter la présence du signal (V/N) dans des fenêtres de rapports de boite, comme ce qui a été décrit précédemment, en utilisant le seuil de stabilité SSTA.
- le deuxième calcul, qui est réalisé en même temps que le premier, consiste à comparer (comparaison 10) le signal (V/N) filtré à sa valeur au pas de calcul précédent , puis à mettre le résultat en valeur absolue 11.

Les résultats de ces deux calculs sont ensuite comparés (fonction comparaison 12) pour donner un signal S"e. Ce signal permet la confirmation de l'état d'accouplement de l'ensemble moteur - boite de vitesse et de participer, en plus des critères Se et S'e, à la création d'un signal SEMB robuste vis-à-vis de l'état d'accouplement et des fluctuations possibles de V et N.

### - COMPARAISON DE Se, S'e et S"e

Les signaux de sortie Se, S'e et S"e, obtenus respectivement après comparaison S4, fonction logique 6 et fonction logique 12, sont combinés par une fonction logique 13 de type ET, qui délivre un signal d'embrayage SEMB non perturbé.

### CREATION DU SIGNAL SDEB

Le procédé consiste également à créer un signal représentatif de l'état débrayé SDEB (figure 3) de l'ensemble moteur - boite de vitesses à partir de deux signaux Sdeb et S'deb. Le premier des deux signaux (Sdeb et S'deb) qui traduit un état débrayé est pris en compte (fonction 14) pour créer le signal SDEB.

### - CREATION DU SIGNAL Sdeb

Un premier signal Sdeb peut être obtenu à partir d'un front descendant du signal SEMB, qui change d'état quand le conducteur appuie sur la pédale d'embrayage (non représentée). Pour détecter le front descendant 15, on réalise une comparaison logique ET (non représentée) du signal SEMB avec sa valeur précédente, mémorisée dans une cellule mémoire (non représentée), pour repérer son changement d'état.

Cette méthode bien connue de l'homme du métier pourra être utilisée pour la détection de fronts montants ou de fronts descendants de tout signal.

### - CREATION DU SIGNAL S'deb

Un deuxième signal S'deb peut être obtenu à partir de la détection d'un front montant 16 d'un signal Sd, qui change d'état en fonction de plusieurs comparaisons.

La première comparaison 17 envisagée concerne le cas où le véhicule ne roule pas. Si la stratégie de contrôle reconnaît l'état embrayé quand le véhicule ne roule pas, ce qui correspond à un seuil minimal S3 déterminé du signal V/N filtré, le signal Sd ne doit pas être obtenu par cette détection de décélération du régime, ceci pour éviter éventuellement des sauts de régime intempestifs au point mort et pouvoir repérer une nouvelle phase de départ du véhicule, c'est-à-dire un nouvel embrayage sachant que les actions sur la pédale d'embrayage, notamment pour débrayer, ne peuvent pas être détectées à l'arrêt, quand la vitesse du véhicule est nulle et le régime constant. A cet effet, le signal V/N est comparé au seuil S3, lors d'une étape de comparaison 17.

La deuxième comparaison concerne la décélération du régime moteur N. On réalise la détection d'une décélération du régime moteur N instantané, obtenue par calibration, très caractéristique du moment où se produit le désaccouplement de l'ensemble moteur - boite de vitesses. Le signal (V/N) est comparé à un seuil S1 qui est fonction des rapports possibles de la boite de vitesses pour donner un signal de seuil. On compare alors la dérivée première (dN/dt) filtrée au signal de seuil, lors de l'étape de comparaison 18.

Selon une caractéristique additionnelle du procédé de reconnaissance selon l'invention, l'étape de création du signal SDEB peut se faire également par la prise en compte d'une information freinage. C'est-à-dire que pour créer le signal Sd, on peut tenir compte du cas où le conducteur freine : dans ce cas, le contacteur digital de la pédale de frein du véhicule (non représenté) envoi un signal (information freinage). En cas de détection du signal (information freinage), le signal de (dN/dt) est remplacé par un seuil SB (étape 19). Le seuil SB est calibrable, inhibant la détection d'une décélération du régime sous freinage non lié à un désaccouplement moteur - boite.

Cette prise en compte l'information de freinage évite un faux basculement du signal Sd dû à la chute importante du régime sous freinage qui pourrait être reconnu alors comme un débrayage par la stratégie. Le critère SEMB, notamment S"e, et sa variation est alors privilégié lors de la détection d'une information freinage pour gérer la détection d'accouplement ou de désaccouplement (c'est-à-dire état embrayé ou état débrayé).

### CREATION DU SIGNAL Sd

Les résultats des deux comparaisons 17 et 18 sont ajoutés lors d'une addition logique ET 20, qui délivre le signal Sd.

Une fonction logique OU 14 délivre le signal SDEB, obtenu par combinaison de deux précédents signaux Sdeb et S'deb, c'est-à-dire que le premier des deux signaux (Sdeb et S'deb) qui traduit un état débrayé est pris en compte pour créer le signal SDEB.

### CREATION DU SIGNAL SEF

Les deux signaux SEMB et SDEB vont être utilisés pour créer le signal exploitable par les calculateurs électroniques de contrôle moteur, dans le véhicule, et délivrant l'information sur l'état du dispositif d'embrayage de l'ensemble moteur - boite de vitesse.

Pour cela, les signaux SEMB et SDEB entrent dans une bascule logique RS (référence 21), dont le signal binaire de sortie SEF est égal à 1, s'il était égal à 0 au calcul précédent et si un front montant 22 est observé sur le signal SEMB.

Par contre, ce signal SEF passe à 0 s'il était à 1 au calcul précédent avec un front montant 23 observé sur le signal SDEB.

## Revendications

1. Procédé de reconnaissance de l'état d'un dispositif d'embrayage entre un moteur et une boite de vitesses d'un véhicule automobile, le procédé délivrant un signal (SEF) représentatif de l'état du dispositif d'embrayage ; le signal (SEF) provenant de la prise en compte d'un signal (SEMB) représentatif de l'état embrayé, et d'un signal (SDEB) représentatif de l'état débrayé ; les signaux (SEMB) et (SDEB) étant calculés à partir d'un signal (V/N) représentant le rapport de la vitesse (V) du véhicule sur le régime (N) du moteur, et d'un signal (dN/dt) représentant la dérivée première du régime moteur par rapport au temps ;
le signal (SEMB) étant obtenu à partir :
- d'une fonction logique (ET) barre inversée qui combine la valeur du régime moteur (N), quand elle est inférieure à un seuil maximal déterminé (SN) avec la valeur du signal (V) quand elle est supérieure à un seuil (SV) déterminé correspondant au débrayage de l'ensemble moteur - boite de vitesses en phase de roulage du véhicule, et qui délivre un signal (S'e) ;
- et d'un signal (Se), obtenu par comparaison du signal (V/N) avec un ensemble de seuils correspondant aux rapports de la boite de vitesses ;
**caractérisé en ce qu'**un signal (S"e) provenant d'une étape de caractérisation de la stabilité du signal (V/N), consistant en la comparaison du signal (V/N) par rapport à sa valeur au pas de calcul précédent, mise en valeur absolue et comparée à un ensemble de seuils (SSTA) fonction du signal (V/N), est combinée aux signaux Se et S'e par une fonction logique (ET) pour délivrer un signal (SEMB) non perturbé.

2. Procédé de reconnaissance de l'embrayage selon la revendication 1, **caractérisé en ce que** l'étape de création du signal (SDEB) se fait également par la prise en compte d'un signal (information freinage).

3. Procédé de reconnaissance selon la revendication 2, **caractérisé en ce que** le signal (information freinage) provient d'un contacteur digital situé sur la pédale de frein.

4. Procédé de reconnaissance selon la revendication 2 ou 3, **caractérisé en ce qu'**en cas de détection du signal (information freinage), le signal de (dN/dt) est remplacé par un seuil (SB), calibrable, inhibant la détection d'une décélération du régime sous freinage non lié à un désaccouplement moteur-boite.

5. Procédé de reconnaissance de l'embrayage selon l'une des revendications précédentes, **caractérisé en ce que** la détection d'une décélération du régime moteur (N) est obtenue par comparaison de la dérivée première (dN/dt) du régime moteur (N) par rapport au temps avec des seuils (S1) fonction du signal (V/N), déterminés par calibration.

6. Procédé de reconnaissance de l'embrayage selon la revendication 5, **caractérisé en ce que**, dans le cas d'une stratégie de contrôle moteur reconnaissant l'état embrayé de l'ensemble moteur - boite de vitesses à l'arrêt du véhicule, il comporte une étape d'inhibition de la détection d'une décélération du régime moteur pour créer un signal d'embrayage, par comparaison du signal (V/N) avec un seuil (S3) minimal correspondant à l'arrêt du véhicule, suivie d'une addition logique (ET) des résultats des deux précédentes comparaisons avec les seuils (S1 et S3) qui délivre un signal (Sd) qui est ensuite comparé à sa valeur précédente mémorisée, pour délivrer un signal (S'deb).

7. Procédé de reconnaissance selon l'une quelconque des revendications précédentes, **caractérisé en ce que** la détection d'un changement d'état du signal d'embrayage (SEMB), quand la pédale d'embrayage est enfoncée, est réalisée par une comparaison logique (ET) dudit signal d'embrayage (SEMB) avec sa valeur précédente mémorisée, qui délivre un signal de débrayage (Sdeb).

8. Procédé de reconnaissance selon les revendications 6 et 7, **caractérisé en ce que** les deux signaux (Sdeb) issu de la détection d'un changement d'état du signal (SEMB) d'une part, et (S'deb) d'autre part sont combinés dans une fonction logique (OU) qui délivre un signal (SDEB).

## Claims

1. State-recognition method for a clutch device between an engine and a gearbox of a motor vehicle, the method delivering a signal (SEF) representative of the state of the clutch device; the signal (SEF) being based on taking into account a signal (SEMB) representative of the clutched state, and a signal (SDEB) representative of the declutched state; the signals (SEMB) and (SDEB) being calculated from a signal (V/N) representing the ratio of the speed (V) of the vehicle to the speed (N) of the engine, and from a signal (dN/dt) representing the first derivative of the engine speed with respect to time;
the signal (SEMB) being obtained from:
- a backslash logic function (AND) which combines the engine speed value (N), when it is less than a determined maximum threshold (SN), with the value of the signal (V) when it is greater than a determined threshold (SV) corresponding to the declutching of the engine-gearbox assembly in the vehicle running phase, and which delivers a signal (S'e);
- and a signal (Se), obtained by comparing the signal (V/N) with a set of thresholds corresponding to the gearbox ratios;
**characterized in that** a signal (S"e) originating from a step for characterizing the stability of the signal (V/N), consisting in comparing the signal (V/N) relative to its value in the preceding calculation step, set to an absolute value and compared to a set of thresholds (SSTA) dependent on the signal (V/N), is combined with the signals Se and S'e by a logic function (AND) to deliver a signal (SEMB) that is not disturbed.

2. Clutch recognition method according to Claim 1, **characterized in that** the step for creating the signal (SDEB) also involves taking into account a signal (braking information).

3. Recognition method according to Claim 2, **characterized in that** the signal (braking information) originates from a digital switch located on the brake pedal.

4. Recognition method according to Claim 2 or 3, **characterized in that**, in case of detection of the signal (braking information), the signal from (dN/dt) is replaced by a threshold (SB), which can be calibrated, disabling the detection of a deceleration of the engine speed under braking unconnected with an engine-gearbox decoupling.

5. Clutch recognition method according to one of the preceding claims, **characterized in that** the detection of a deceleration of the engine speed (N) is obtained by comparing the first derivative (dN/dt) of the engine speed (N) with respect to time with thresholds (S1) dependent on the signal (V/N) determined by calibration.

6. Clutch recognition method according to Claim 5, **characterized in that**, in the case of an engine control strategy recognizing the clutched state of the engine-gearbox assembly when the vehicle is stopped, it comprises a step for disabling the detection of a deceleration of the engine speed to create a clutching signal, by comparing the signal (V/N) with a minimum threshold (S3) corresponding to the stopping of the vehicle, followed by a logical addition (AND) of the results of the preceding two comparisons with the thresholds (S1 and S3) which delivers a signal (Sd) which is then compared to its stored previous value, to deliver a signal (S'deb).

7. Recognition method according to any one of the preceding claims, **characterized in that** the detection of a change of state of the clutching signal (SEMB), when the clutch pedal is depressed, is performed by a logical comparison (AND) of said clutching signal (SEMB) with its stored previous value, which delivers a declutching signal (Sdeb).

8. Recognition method according to Claims 6 and 7, **characterized in that** the two signals (Sdeb) obtained from the detection of a change of state of the signal (SEMB) on the one hand, and (S'deb) on the other hand, are combined in a logic function (OR) which delivers a signal (SDEB).

## Patentansprüche

1. Verfahren zur Erkennung des Zustands einer Kupplungsvorrichtung zwischen einem Motor und einem Schaltgetriebe eines Kraftfahrzeugs, wobei das Verfahren ein für den Zustand der Kupplungsvorrichtung repräsentatives Signal (SEF) liefert, wobei das Signal (SEF) von der Berücksichtigung eines für den gekuppelten Zustand repräsentativen Signals (SEMB) und eines für den ausgekuppelten Zustand repräsentativen Signals (SDEB) stammt; wobei die Signale (SEMB) und (SDEB) ausgehend von einem Signal (V/N), das das Verhältnis der Geschwindigkeit (V) des Fahrzeugs zur Drehzahl (N) des Motors darstellt, und von einem Signal (dN/dt) berechnet werden, das die erste Ableitung der Motordrehzahl bezüglich der Zeit darstellt;
wobei das Signal (SEMB) erhalten wird ausgehend von:
- einer logischen Funktion (UND) invertierter Strich, die den Wert der Motordrehzahl (N), wenn er unter einem bestimmten maximalen Schwellwert (SN) liegt, mit dem Wert des Signals (V) kombiniert, wenn er über einem bestimmten Schwellwert (SV) liegt, der der Auskupplung der Motor-Getriebe-Einheit in der Rollphase des Fahrzeugs entspricht, und die ein Signal (S'e) liefert;
- und einem Signal (Se), das durch Vergleich des Signals (V/N) mit einer Gruppe von Schwellwerten erhalten wird, die den Gängen des Schaltgetriebes entsprechen;
**dadurch gekennzeichnet, dass** ein von einem Schritt der Kennzeichnung der Stabilität des Signals (V/N), der aus dem Vergleich des Signals (V/N) mit seinem Wert im vorhergehenden Rechenschritt, auf den Absolutwert gebracht und mit einer Gruppe von vom Signal (V/N) abhängenden Schwellwerten (SSTA) verglichen, besteht, kommendes Signal (S"e) durch eine logische Funktion (UND) mit den Signalen Se und S'e kombiniert wird, um ein nicht gestörtes Signal (SEMB) zu liefern.

2. Verfahren zur Erkennung der Kupplung nach Anspruch 1, **dadurch gekennzeichnet, dass** der Schritt der Erzeugung des Signals (SDEB) ebenfalls durch die Berücksichtigung eines Signals (Bremsinformation) erfolgt.

3. Erkennungsverfahren nach Anspruch 2, **dadurch gekennzeichnet, dass** das Signal (Bremsinformation) von einem digitalen Kontaktelement stammt, das sich auf dem Bremspedal befindet.

4. Erkennungsverfahren nach Anspruch 2 oder 3, **dadurch gekennzeichnet, dass** im Fall der Erfassung des Signals (Bremsinformation) das Signal von (dN/dt) durch einen kalibrierbaren Schwellwert (SB) ersetzt wird, der die Erfassung einer Drehzahlverzögerung beim Bremsen verhindert, die nicht mit einer Motor-Getriebe-Auskupplung verbunden ist.

5. Verfahren zur Erkennung der Kupplung nach einem der vorhergehenden Ansprüche, **dadurch gekennzeichnet, dass** die Erfassung einer Verzögerung der Motordrehzahl (N) durch Vergleich der ersten Ableitung (dN/dt) der Motordrehzahl (N) bezüglich der Zeit mit vom Signal (V/N) abhängenden Schwellwerten (S1) erhalten wird, die durch Kalibrierung bestimmt werden.

6. Verfahren zur Erkennung der Kupplung nach Anspruch 5, **dadurch gekennzeichnet, dass** es im Fall einer Motorüberwachungsstrategie, die den eingekuppelten Zustand der Motor-Getriebe-Einheit beim Stillstand des Fahrzeugs erkennt, einen Schritt des Verhinderns der Erfassung einer Verzögerung der Motordrehzahl aufweist, um ein Kupplungssignal zu erzeugen, durch Vergleich des Signals (V/N) mit einem Mindestschwellwert (S3), der dem Stillstand des Fahrzeugs entspricht, gefolgt von einer logischen Addition (UND) der Ergebnisse der zwei vorhergehenden Vergleiche mit den Schwellwerten (S1 und S3), die ein Signal (Sd) liefert, das anschließend mit seinem gespeicherten vorhergehenden Wert verglichen wird, um ein Signal (S'deb) zu liefern.

7. Erkennungsverfahren nach einem der vorhergehenden Ansprüche, **dadurch gekennzeichnet, dass** die Erfassung einer Zustandsänderung des Kupplungssignals (SEMB), wenn das Kupplungspedal gedrückt wird, durch einen logischen Vergleich (UND) des Kupplungssignals (SEMB) mit seinem gespeicherten vorhergehenden Wert durchgeführt wird, der ein Auskupplungssignal (Sdeb) liefert.

8. Erkennungsverfahren nach den Ansprüchen 6 und 7, **dadurch gekennzeichnet, dass** die zwei Signale, das von der Erfassung einer Zustandsänderung des Signals (SEMB) stammende (Sdeb) einerseits, und (S'deb) andererseits, in einer logischen Funktion (ODER) kombiniert werden, die ein Signal (SDEB) liefert.
